# EUROPEAN PATENT SPECIFICATION

(11) **EP 4 195 876 B1**
(45) Date of publication and mention of the grant of the patent: **25.11.2026**
(21) Application number: 22212944.7
(22) Date of filing: 12.12.2022
(51) Int. Cl.: B23P 11/02, B23P 15/00, H05B 6/38, C21D 1/42

(54) **FIXTURE AND METHOD FOR INDUCTION HEATING OF BORED PARTS**
VORRICHTUNG UND VERFAHREN ZUR INDUKTIONSERWÄRMUNG VON GEBOHRTEN TEILEN
DISPOSITIF ET PROCÉDÉ DE CHAUFFAGE PAR INDUCTION DE PIÈCES FORÉES

(30) Priority: 10.12.2021 US 202117547848
(43) Date of publication of application: 14.06.2023
(73) Proprietor: PRATT & WHITNEY CANADA CORP., Longueuil, Québec J4G 1A1 (CA)
(72) Inventor: GAUDET, Pierre, (01BE5) Longueuil, J4G 1A1 (CA); LACHANCE, Pierre-Luc, (01BE5) Longueuil, J4G 1A1 (CA)
(74) Representative: Dehns

(56) References cited:
- CN-A- 109 468 436
- US-A1- 2011 247 732
- US-A1- 2014 223 982

## Description

### TECHNICAL FIELD

The disclosure relates generally to induction heating, and more particularly to heating bored parts using induction heating.

### BACKGROUND

A bored part can be connected to a shaft via an interference fit where the diameter of the shaft is slightly larger than the diameter of the bore. In order to establish such interference fit, a shrink-fitting technique may be employed where the bored part is heated in order to thermally expand the size of the bore before inserting the shaft, which is at a lower temperature than the bored part, into the bore. Subsequent cooling of the bored part with the shaft inserted in the bore causes the bore to contract and become engaged with the shaft via an interference fit.

Obtaining a relatively uniform temperature distribution in the region of the bore of the bored part without having to heat the entire bored part prior to shrink-fitting can be challenging. Improvement is desirable.

US 2014/223982 A1 relates to systems and methods for cooling sheet forming panels post annealing treatment.

### SUMMARY

According to one aspect of the invention, a method is as claimed in claim 1.

According to a further aspect of the invention, an induction heating assembly is as claimed in claim 6.

Embodiments of these aspects of the invention are as claimed in the dependent claims thereof.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a perspective view of an induction heating fixture and a bored part to be heated using the induction heating fixture, the induction heating fixture being shown as being separated from the bored part;
FIG. 2 is a perspective view of an assembly including the induction heating fixture of FIG. 1 mounted to the bored part;
FIG. 3 is a cross-sectional view of part of the assembly of FIG. 2 taken along line 3-3 shown in FIG. 2;
FIG. 4 is a perspective view of a base of the induction heating fixture of FIG. 1;
FIGS. 5A and 5B are schematic representations illustrating an exemplary method of mounting the induction heating fixture of FIG. 1 to the bored part, and releasing the induction heating fixture of FIG. 1 from bored part; and
FIG. 6 is a flow diagram of a method of heating a bored part using induction heating.

### DETAILED DESCRIPTION

This disclosure describes fixtures and methods to facilitate induction heating of bored parts. In some embodiments, the fixtures and methods described herein may promote a relatively uniform heat distribution within a bored region of a bored part without having to heat the entire part, and also without having to rotate the part. Induction heating of a bored part using a fixture and method described herein may be used to establish an interference fit (via shrink fitting) between a bored part and a counterpart component such as a shaft for example. In some embodiments, the fixtures and methods described herein may be used to heat a bored region (e.g., bored hub) of a rotor disk such as a turbine rotor disk, or a compressor rotor disk of a gas turbine engine. The heating of the rotor disk may be part of a shrink-fitting procedure for establishing an interference fit between the rotor disk and a shaft of the gas turbine engine for example. The fixtures and methods described herein may also be used to establish shrink fits between other types of parts, including for the installation of bearings and seals for example.

In some embodiments, the fixtures and methods described herein may be used to heat a bored part that may be oriented so that the bore is substantially horizontal. In the horizontal orientation, such bore may be susceptible to convective heat transfer where an upper portion of the bore may become hotter than a lower portion of the bore due to heat tending to rise. During a shrink-fitting procedure, uneven heating of the part in the region of the bore may increase the risk of misalignment between the bored part and the shaft after the shrink fit has been established. In order to counter the problem of uneven heating due to convective heat transfer, the fixtures and methods described herein may position an induction coil eccentrically within the bore so that the induction coil may be disposed closer to a bottom surface portion of the bore than to an upper surface portion of the bore. The eccentric positioning of the induction coil may partially compensate for the convective heat transfer by inducing a higher flux density in the lower portion of the bore than in the upper portion of the bore and thereby promote a more uniform temperature distribution around the bore of the part.

Aspects of various embodiments are described through reference to the drawings.

The terms "attached", "engaged" or "coupled" may include both direct attachment/engagement/coupling (in which two elements contact each other) and indirect coupling attachment/engagement/coupling (in which at least one additional element is disposed between the two elements).

The term "substantially" as used herein may be applied to modify any quantitative representation which could permissibly vary without resulting in a change in the basic function to which it is related.

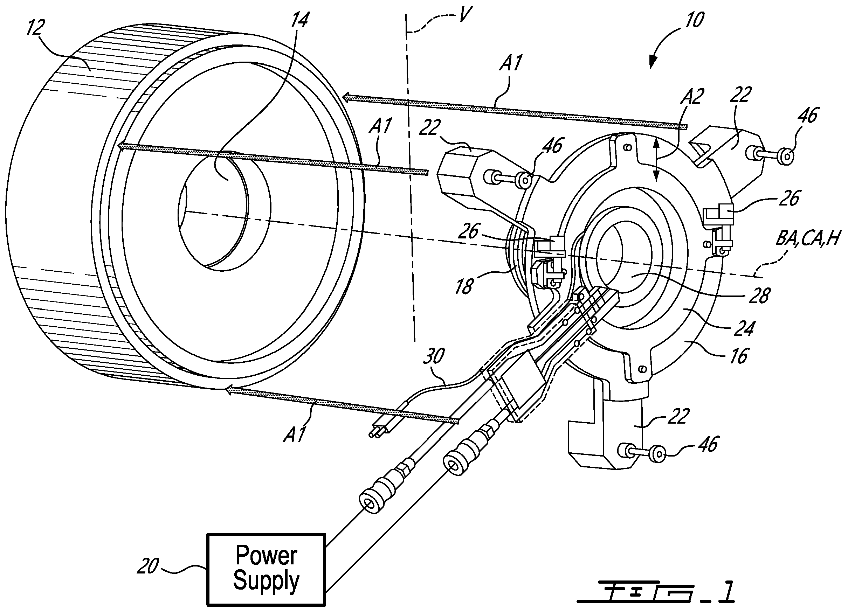

FIG. 1 is a perspective view of an exemplary induction heating fixture 10 (referred hereinafter as "fixture 10") and a bored part 12 (referred herein after as "part 12") to be heated using fixture 10. In some embodiments, part 12 may be a rotor disk of a gas turbine engine, a gear, a wheel, or a pulley for example. Part 12 may be made of a metallic material and may include bore 14, which may be formed in a hub of part 12. Bore 14 may have central bore axis BA along which bore 14 may extend. In some embodiments, bore 14 may be cylindrical. In some embodiments, bore 14 may have a circular cross-sectional profile in a plane perpendicular to bore axis BA. In some embodiments, bore 14 may have a uniform or a non-uniform (e.g., stepped) diameter along bore axis BA. In some embodiments, bore 14 may have a non-circular (e.g., oval, square) cross-sectional profile in a plane perpendicular to bore axis BA.

Fixture 10 may be configured to be mounted to part 12 as shown by arrows A1 in FIG. 1 indicating movement of fixture 10 toward part 12 in preparation for mounting fixture 10 onto part 12. Fixture 10 includes base 16 supporting induction heating coil 18 (referred hereinafter as "coil 18"), which may be a suitable inductor inserted into bore 14 for inductively heating part 12 from inside bore 14. Coil 18 is wound about coil axis CA. Coil 18 may be a multi-turn coil having a generally cylindrical or other overall shape that substantially matches a shape of bore 14 for the purpose of being inductively coupled to part 12 via the surface of bore 14. Coil 18 may include an electrically conductive metallic (e.g., copper) tube, which may be supplied with alternating current (AC) of a suitable frequency by power supply 20 during operation. In some embodiments, coil 18 may be supplied with a cooling fluid such as water flowing therethrough during operation. In some embodiments, two or more coils may be attached to carriage 24. Such two or more coils may be part of separate circuits and may be separately excitable. Aspects of the present disclosure may be used with inductors of various types and shapes selected based on specific part geometries.

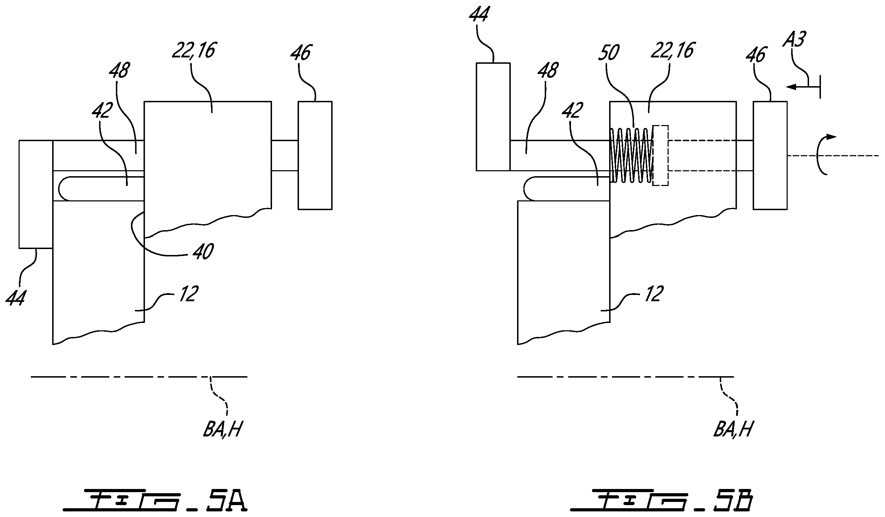

Base 16 may define any structure suitable to facilitate a relative secure attachment of fixture 10 to part 12. In some embodiments, base 16 may include (e.g., three) legs 22 extending radially outwardly from coil axis A. Legs 22 may each have one or more locators and/or one or more clamps for engagement with part 12 as shown in FIGS. 5A and 5B and explained further below.

Fixture 10 includes carriage 24 adjustably attached to base 16. Coil 18 is attached to carriage 24 and is adjustable with carriage 24 relative to base 16. A (e.g., vertical) position of carriage 24 may be adjustable along arrow A2 relative to base 16 via one or more actuators 26. Actuators 26 may be manually or electrically actuatable. In some embodiments, actuators 26 may each include a screw to impart relative movement between base 16 and carriage 24.

FIG. 1 shows coil axis CA and bore axis BA as being coaxial with each other, and also being parallel (e.g., coaxial) with horizontal orientation H. Horizontal orientation H may be substantially parallel to a level ground. However, when base 16 is securely attached to part 12, the vertical position of coil 18 may be adjusted along arrow A2 to adopt a non-coaxial (e.g., eccentric) position of coil 18 relative to bore 14. When bore axis BA is substantially parallel to horizontal orientation H, positional adjustment of carriage 24 and coil 18 along arrow A2 may be substantially parallel to vertical orientation V, which may be substantially perpendicular to horizontal orientation H.

It is understood that, in some embodiments, a suitable fixture without such adjustability may be used to support coil 18 at a fixed (i.e., non-adjustable, built-in) amount of eccentricity relative to bore 14. Such fixed amount of eccentricity may be predetermined based on empirical information and/or based on modeling/simulation information associated with heating a specific part and an expected uneven temperature distribution that is to be compensated by way of eccentric positioning of coil 18 relative to bore 14.

Even though bore axis BA is shown as being parallel with horizontal orientation H in FIG. 1, it is understood that fixture 10 and the methods described herein may also be used in situations where bore axis BA is not parallel with horizontal orientation H. For example, fixture 10 and the methods described herein may be used in situations where part 12 is oriented so that bore axis BA has a non-vertical orientation where convective heat transfer may influence temperature uniformity around bore 14 during induction heating. In some embodiments of fixture 10 and the methods described herein, bore axis BA may be between 0 and 5 degrees of horizontal orientation H for example. In some embodiments of fixture 10 and the methods described herein, bore axis BA may be between 0 and 10 degrees of horizontal orientation H for example. In some embodiments of fixture 10 and the methods described herein, bore axis BA may be between 0 and 45 degrees of horizontal orientation H for example.

Coil 18 may be attached to suitable support and bracing structure, which may include stud board(s) and which may serve to attach (e.g., fasten, bond) coil 18 to carriage 24 in a suitable manner. In reference to FIG. 1, coil 18 may extend axially rearward of base 16 so that coil 18 may extend into bore 14 when base 16 is mounted to an axial end (e.g., an axial face) of part 12.

During heating of part 12 by induction heating, coil 18 may be disposed inside bore 14 and be inductively coupled to part 12. Inductive coupling between coil 18 and part 12 may occur when coil 18 is sufficient close to a surface of part 12 so that the alternating electric current in coil 18 induces an alternating electric current in part 12. In some embodiments, coil 18 may be inductively coupled with at least a majority of a circumferential surface of bore 14. For example, in cases where coil 18 has a multi-turn configuration, coil 18 may be inductively coupled to an entire circumference of bore 14 at least for some of the axial span of bore 14. As explained below, the eccentric positioning of coil 18 within bore 14 may result in a non-uniform inductive coupling distance between coil 18 and bore 14 around the circumference of bore 14. Such non-uniform coupling distance may consequently cause a non-uniform flux density around the circumference of bore 14 to compensate for convective heat transfer, and thereby promote a more uniform temperature distribution around bore 14.

In some embodiments, one or more temperature sensors 30 (e.g., thermocouple, infrared sensor) may be used during heating of part 12 to monitor and control the heating process. In some embodiments, temperature sensor 30 may be operatively connected to power supply 20 so that power supply 20 may supply current to coil 18 in a feedback control loop based on a desired set point temperature for example. Temperature sensor 30 may be operatively installed to measure a temperature of part 12 or other suitable component that may provide a feedback temperature suitable for controlling the operation of coil 18.

In order to determine a suitable amount of eccentricity between bore 14 and coil 18, two or more temperature sensors 30 may be used to monitor temperatures at different locations around bore 14 during induction heating. These temperatures may then be used to adjust the vertical position of coil 18 relative to bore 14 via actuators 26 to obtain the desired temperature distribution (e.g., uniformity) around bore 14.

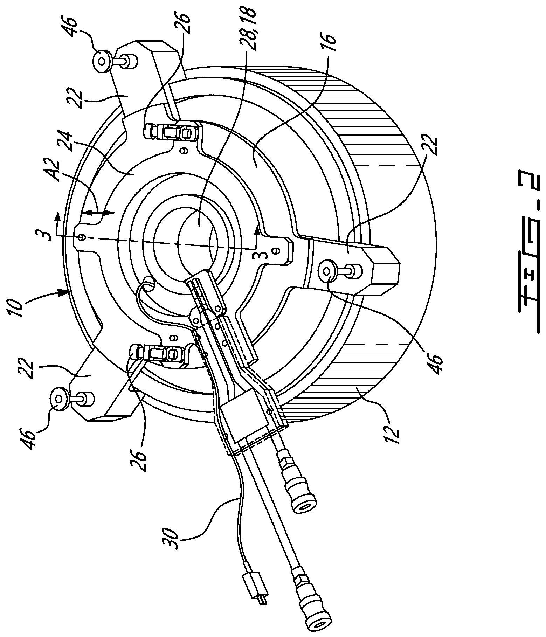

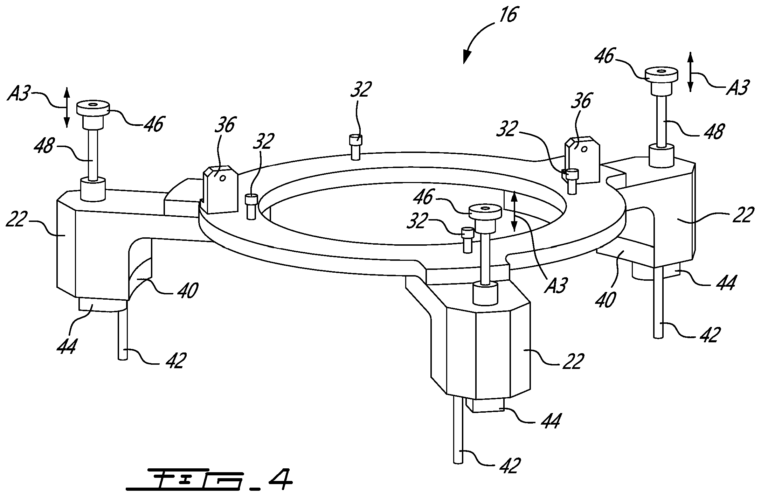

FIG. 2 is a perspective view of an assembly including fixture 10 and part 12. Base 16 of fixture 10 may be attached to part 12 via legs 22, and be located relative to an external circular surface of part 12 via one or more locators shown in FIG. 4. Before or after mounting fixture 10 to part 12, the vertical position of coil 18 may be adjusted along arrow A2 via one or more actuator 26 so that coil axis CA may be non-coaxial to bore axis BA during heating of part 12 using coil 18.

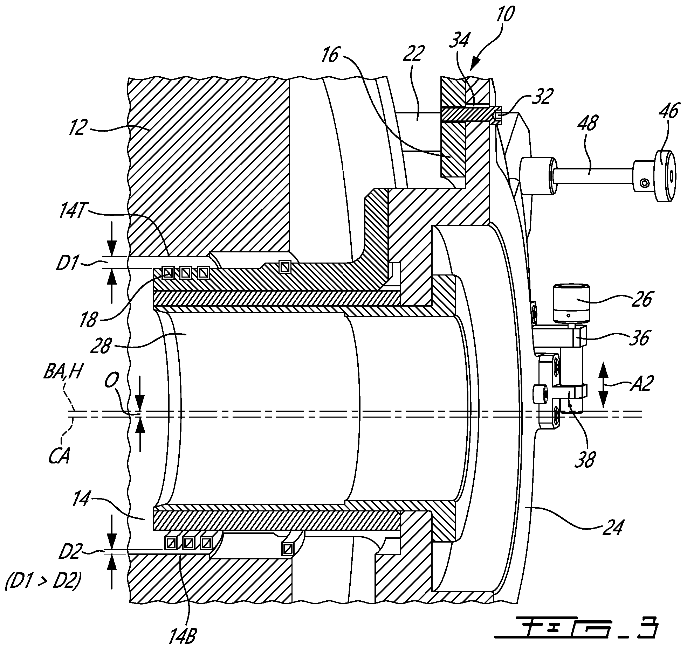

FIG. 3 is a cross-sectional view of part of the assembly of FIG. 2 taken along line 3-3 in FIG. 2. FIG. 3 shows coil 18 having a multi-turn configuration but coils of other configurations may be used for other part geometries. Coil 18 may be wrapped around coil axis CA, which may be non-coaxial with bore axis BA. The position of coil 18 relative to bore 14 shows an exemplary in-use configuration of fixture 10 and part 12 when electric current is driven into coil 18 to heat part 12 using coil 18. As shown in FIG. 3, coil 18 may be disposed closer to bottom 14B (e.g., lower surface portion, bottom dead center) of bore 14 than to top 14T (e.g., upper surface portion, top dead center) of bore 14 to compensate for convective heat transfer, which may cause heat to rise. In some embodiments, part 12 and coil 18 may be stationary when heating part 12 so that no scanning or rotation of part 12 may be required.

The eccentricity of coil 18 relative to bore 14 may be expressed in terms of different (i.e., non-uniform) coupling distances D1, D2 between coil 18 and bore 14 around the circumference of bore 14. For example, upper coupling distance D1 may be greater than lower coupling distance D2 (i.e., D1 > D2). In some embodiments, upper coupling distance D1 between coil 18 and top 14T of bore 14 may be between two and three times greater than lower coupling distance D2 between coil 18 and bottom 14B of bore 14. In some embodiments, upper coupling distance D1 between coil 18 and top 14T of bore 14 may be between 1.2 and six times greater than lower coupling distance D2 between coil 18 and bottom 14B of bore 14. Coupling distances D1 and D2 may be selected based on the orientation of bore axis BA, which may affect the influence of convective heat transfer on the temperature distribution. Coupling distances D1, D2 may be selected so that coil 18 is still inductively coupled with top 14T of bore 14 and with bottom 14B of bore 14 but that the flux density inducted by coil 18 may be greater at bottom 14B of bore 14 than at top of bore 14. For example, coupling distances D1, D2 may be between 0.06 inch (1.5 mm) and 0.4 inch (10 mm) in some embodiments. In various embodiments, coil 18 may be inductively coupled to at least a majority (or to an entirety) of a circumference of bore 14 when part 12 is being heated via coil 18.

Reasons for positioning coil 18 in an eccentric manner within bore 14 could be different than compensating for convective heat transfer. For example, such eccentric positioning could be done to compensate for a non-uniform wall thickness around bore 14. Another reason could be for compensating for a non-uniform distribution of mass around bore 14 due to the presence of holes that are not evenly distributed outside and along a circumference of bore 14 for example. Accordingly, fixture 10 may be used for eccentric positioning of coil 18 inside bores 14 having vertical, horizontal and/or other orientations.

The eccentricity of coil 18 relative to bore 14 may be expressed in terms of offset distance O between coil axis CA and bore axis BA. As shown in FIG. 3, coil axis CA and bore axis BA are substantially parallel but the vertical position of coil 18 is adjusted so that coil axis CA is offset (e.g., downwardly) from bore axis BA by offset distance O. In some embodiments, offset distance O may be related in part to a diameter of bore 14. For example, offset distance O may be between 0.1% and 5% of the diameter of bore 14.

In some embodiments, fixture 10 may be adjustable to permit positional adjustment of coil 18 relative to base 16. Positional adjustment of coil 18 may be achieved by adjustment of ring-shaped carriage 24 relative to base 16. In some embodiments, carriage 24 may be releasably attached to base 16 via one or more threaded fasteners 32 (e.g., bolts, screws) (referred hereinafter in the singular). Fastener 32 may extend through carriage 24 via slotted hole 34 and be threadingly engaged with base 16. Loosening of fastener 32 may permit movement of carriage 24 along arrow A2 by a travel amount afforded by slotted hole 34 and by actuator 26. Slotted hole 34 may be oriented so that a longer (major) axis of slotted hole 34 may be substantially parallel to vertical orientation V (shown in FIG. 1) and arrow A2. After positional adjustment of carriage 24 relative to base 16 via actuator 26 has been completed, carriage 24 may then be locked onto base 16 by way of tightening of fastener 32.

In various embodiments, guiding of the movement of carriage 24 relative to base 16 may be achieve by any suitable means such as a screw or bolt inside a slot, a pin inside a slot, and/or a rail and a linear bearing system for example. In various embodiments, carriage 24 may be movable (e.g., translatable and/or rotatable) relative to base 16 in one or more degrees of freedom. In some embodiments, carriage 24 may be translatable only along a single direction (e.g., along arrow A2). In some embodiments, carriage 24 may be translatable along two orthogonal directions. In some embodiments, carriage 24 may be rotatable about coil axis CA.

As shown in FIG. 3, actuator 26 may be a manually actuated screw which may be engaged with base tab 36 attached to base 16, and which may also be engaged with carriage tab 38 attached to carriage 24. Turning of the screw in one direction may cause carriage tab 38 to move toward base tab 36 along arrow A2, and turning of the screw in the opposite direction may cause carriage tab 38 to move away from base tab 36 along arrow A2. In some embodiments, fixture 10 may include a graduated scale including a set of markings (graduations) along a linear and/or an angular scale to measure an amount of adjustment of carriage 24 relative to base 16.

FIG. 4 is a perspective view of base 16 of fixture 10. Base 16 may be adapted to be attached to part 12 and located using any suitable means such as bosses, threaded holes and fasteners, pins, and other datum surfaces. Base 16 may be configured to interface with an internal surface of part 12, with an external surface of part 12, and/or with a flange of part 12. In some embodiments, base 16 may be configured as a threejaw chuck that may engage with an internal or an external (e.g., circular or hexagonal) surface of part 12. In various embodiments, legs 22 may clamp onto part 12, and/or may have fixed radial positions and may have locators for the purpose of locating base 16 onto part 12. The one or more locators of base 16 may be use for controlled, relatively fine tolerance positioning of base 16 relative to part 12. In reference to FIG. 4, such locators may include datum surfaces 40, pins 42, buttons, pads, and/or other features that are intended to engage with one or more surfaces of part 12. In some embodiments, base 16 may include one or more clamps 44 that may serve to secure base 16 to part 12. Clamps 44 may each be manually actuatable by rotation of knob 46 and translation of knob 46 along arrow A3 as explained below.

FIGS. 5A and 5B are schematic representations illustrating an exemplary manner of mounting fixture 10 to part 12, and releasing fixture 10 from part 12 respectively. As shown in FIG. 5A, datum surface 40 may engage with an axial face of part 12 for locating base 16 axially along bore axis BA. Three pins 42 may engage a radially-outer (e.g., circular, cylindrical) surface of part 12 for locating base 16 radially relative to bore axis BA. However, as shown in FIG. 4, some datum surfaces 40 may be oriented to engage with the radially-outer surface of part 12 instead of or in addition to pins 42. In reference to FIG. 5A, a flange of part 12 may be received and clamped between leg 22 and clamp 44. Clamp 44 may be manually translatable along arrow A3 and also rotatable via knob 46. Stem 48 may extend through leg 22 as shown in broken lines in FIG. 5B and may interconnect knob 46 and clamp 44.

FIG. 5A shows base 16 being secured to part 12 by way of a flange of part being clamped between clamp 44 and leg 22. In some embodiments, an axial clamping force may be maintained by way of spring 50 (shown in FIG. 5B) interacting with stem 48 to resiliently bias clamp 44 toward a clamped position shown in FIG. 5A.

As shown in FIG. 5B, pressing of knob 46 toward leg 22 using a sufficient force to overcome spring 50 may cause clamp 44 to become disengaged from part 12. Subsequently turning of knob 46 may cause stem 48 and clamp 44 to pivot and cause clamp 44 to move radial away from part 12. Such movement of clamp 44 may permit base 16 to be moved axially relative to part 12 for the purpose of mounting or removing base 16 from part 12.

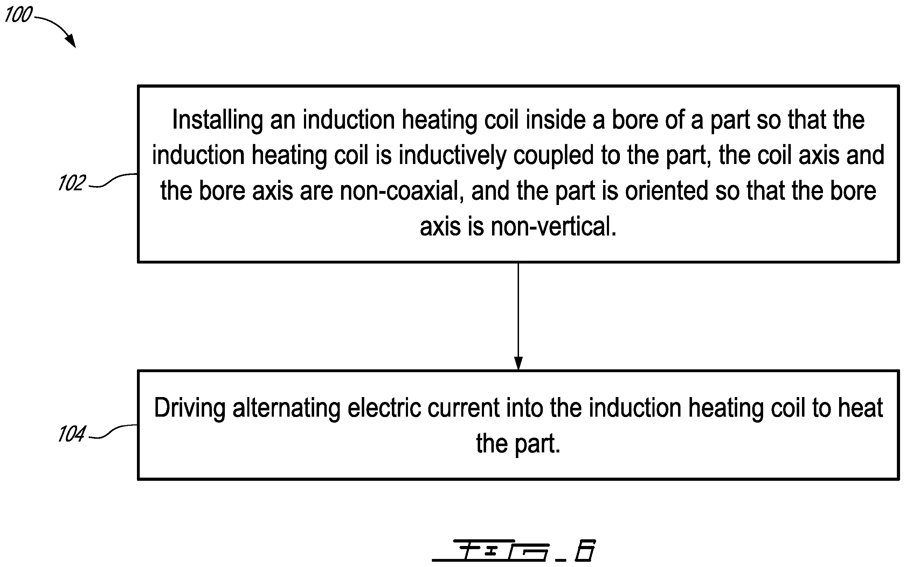

FIG. 6 is a flow diagram of method 100 of heating bored part 12 using induction heating. Method 100 may be performed using fixture 10 or another fixture. Method 100 may be combined with other steps or actions disclosed herein. Aspects of fixture 10 described herein may be incorporated into method 100. In various embodiments, method 100 may include:
installing coil 18 inside bore 14 of part 12 so that coil 18 is inductively coupled to part 12, bore 14 of part having a central bore axis BA, coil 18 being wound about coil axis CA, coil axis CA and bore axis BA being non-coaxial, part 12 being oriented so that bore axis BA is non-vertical (block 102); and
after installing coil 18 inside of bore 14 of part 12, driving alternating electric current into coil 18 to heat part 12 (block 104).

In some embodiments of method 100, coil 18 may be inductively coupled to at least a majority of a circumferential surface of bore 14 of part 12.

In some embodiments of method 100, part 12 may be oriented so that bore axis BA is between 0 and 45 degrees of horizontal orientation H.

Installing coil 18 inside of bore 14 may include mounting fixture 10 to part 12. Fixture 10 may include coil 18 and be mounted to part 12 so that one or more locators of fixture 10 are engaged with part 12. Coil 18 may be disposed eccentrically relative to bore 14 of part 12 so that coil 18 is disposed closer to a lower surface portion of bore 14 than to an upper surface portion of bore 14 to compensate for convective heat transfer and promote a more uniform temperature distribution around a circumference of bore 14.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A method of heating a part (12) using induction heating, the part (12) having a bore (14) formed therein and being oriented so that a central axis (BA) of the bore (14) of the part (12) is oriented between 0 and 45 degrees of horizontal (H), the method comprising:
mounting an induction heating fixture (10) including an induction heating coil (18) to the part (12) so that:
one or more locators of the induction heating fixture (10) are engaged with the part (12);
the induction heating coil (18) is disposed inside the bore (14) of the part (12);
the induction heating coil (18) is disposed eccentrically relative to the bore (14) of the part (12) so that the induction heating coil (18) is disposed closer to a lower surface portion (14B) of the bore (14) than to an upper surface portion (14T) of the bore (14); and
the induction heating coil (18) is inductively coupled to the part (12); and
after mounting the induction heating fixture (10) to the part (12), driving alternating electric current into the induction heating coil (18) to heat the part (12),
wherein:
the induction heating coil (18) is wound about a coil axis (CA);
the coil axis (CA) is parallel to a central axis (BA) of the bore (14); and
the coil axis (CA) is offset from the central axis (BA) of the bore (14).

2. The method as defined in claim 1, wherein:
the induction heating fixture (10) includes a base (16) attached to the part (12);
the one or more locators are disposed on the base (16);
the induction heating fixture (10) includes a carriage (24) vertically adjustable relative to the base (16), the induction heating coil (18) being attached to the carriage (24) and being adjustable with the carriage (24) relative to the base (16); and
the method includes adjusting a vertical position of the induction heating coil (18) relative to the base (16) via the carriage (24).

3. The method as defined in claim 1 or 2, wherein the bore (14) has a circular cross-sectional profile in a plane perpendicular to the central axis (BA) of the bore (14).

4. The method as defined in any preceding claim, wherein the coil axis (CA) is offset from the bore axis (BA) by an offset distance that is between 0.1% and 5% of a diameter of the bore (14).

5. The method as defined in any preceding claim, wherein the induction heating fixture (10) is mounted to the part (12) so that the induction heating coil (18) is inductively coupled to at least a majority of a circumferential surface of the bore (14).

6. An induction heating assembly comprising:
a part (12) having a bore (14), the bore (14) having a central bore axis (BA); and
a fixture (10) mounted to the part (12), the fixture (10) including:
a base (16) including one or more locators engaged with the part (12) and locating the base (16) relative to the part (12); and
an induction heating coil (18) supported by the base (16), the induction heating coil (18) being disposed inside the bore (14) of the part (12) and being inductively coupled to the part (12), the induction heating coil (18) being wound about a coil axis (CA), the coil axis (CA) and the bore axis (BA) being non-coaxial,
wherein:
the coil axis (CA) is offset from the central bore axis (BA);
the fixture (10) includes a carriage (24) adjustably attached to the base (16);
the induction heating coil (18) is attached to the carriage (24) and is adjustable with the carriage (24) relative to the base (16) to vary the coil axis (CA) relative to the central bore axis (BA); and
the coil axis (CA) is parallel to central bore axis (BA) of the bore (14).

7. The induction heating assembly as defined in claim 6, wherein the bore axis (BA) is between 0 and 45 degrees of horizontal (H).

8. The induction heating assembly as defined in claim 6 or 7, wherein the one or more locators include three locators engaged with a cylindrical surface of the part (12).

9. The induction heating assembly as defined in any of claims 6 to 8, wherein:
the bore axis (BA) is horizontal (H); and
the carriage (24) is adjustable along a vertical direction relative to the base (16).

## Patentansprüche

1. Verfahren zum Erwärmen eines Teils (12) unter Verwendung von Induktionserwärmung, das Teil (12) aufweisend eine darin ausgebildete Bohrung (14), die so orientiert ist, dass eine Mittelachse (BA) der Bohrung (14) des Teils (12) zwischen 0 und 45 Grad zur Horizontalen (H) orientiert ist, das Verfahren umfassend:
Montieren einer Vorrichtung (10) zur Induktionserwärmung, beinhaltend eine Induktionsheizspule (18), an dem Teil (12), so dass:
ein oder mehrere Positionierer der Vorrichtung (10) zur Induktionserwärmung in Eingriff mit dem Teil (12) stehen;
die Induktionsheizspule (18) innerhalb der Bohrung (14) des Teils (12) angeordnet ist;
die Induktionsheizspule (18) exzentrisch relativ zu der Bohrung (14) des Teils (12) angeordnet ist, so dass die Induktionsheizspule (18) näher an einem unteren Oberflächenabschnitt (14B) der Bohrung (14) als an einem oberen Oberflächenabschnitt (14T) der Bohrung (14) angeordnet ist; und
die Induktionsheizspule (18) induktiv mit dem Teil (12) gekoppelt ist; und
nach dem Montieren der Vorrichtung (10) zur Induktionserwärmung an dem Teil (12), Einleiten von Wechselstrom in die Induktionsheizspule (18), um das Teil (12) zu erwärmen,
wobei:
die Induktionsheizspule (18) um eine Spulenachse (CA) gewickelt ist;
die Spulenachse (CA) parallel zu einer Mittelachse (BA) der Bohrung (14) verläuft; und
die Spulenachse (CA) von der Mittelachse (BA) der Bohrung (14) versetzt ist.

2. Verfahren nach Anspruch 1, wobei:
die Vorrichtung (10) zur Induktionserwärmung eine Basis (16), die an dem Teil (12) befestigt ist, beinhaltet;
der eine oder die mehreren Positionierer an der Basis (16) angeordnet sind;
die Vorrichtung (10) zur Induktionserwärmung einen Schlitten (24) beinhaltet, der vertikal relativ zu der Basis (16) verstellbar ist, wobei die Induktionsheizspule (18) an dem Schlitten (24) befestigt ist und mit dem Schlitten (24) relativ zu der Basis (16) verstellbar ist; und
das Verfahren ein Verstellen einer vertikalen Position der Induktionsheizspule (18) relativ zu der Basis (16) über den Schlitten (24) beinhaltet.

3. Verfahren nach Anspruch 1 oder 2, wobei die Bohrung (14) ein kreisförmiges Querschnittsprofil in einer Ebene senkrecht zu der Mittelachse (BA) der Bohrung (14) aufweist.

4. Verfahren nach einem der vorhergehenden Ansprüche, wobei die Spulenachse (CA) von der Bohrungsachse (BA) um einen Versatzabstand, der zwischen 0,1 % und 5 % eines Durchmessers der Bohrung (14) liegt, versetzt ist.

5. Verfahren nach einem der vorhergehenden Ansprüche, wobei die Vorrichtung (10) zur Induktionserwärmung so an dem Teil (12) montiert ist, dass die Induktionsheizspule (18) induktiv mit mindestens einer Mehrheit einer Umfangsoberfläche der Bohrung (14) gekoppelt ist.

6. Induktionserwärmungsbaugruppe, umfassend:
ein Teil (12), aufweisend eine Bohrung (14), die Bohrung (14) aufweisend eine Bohrungsmittelachse (BA); und
eine Vorrichtung (10), die an dem Teil (12) montiert ist, die Vorrichtung (10) beinhaltend:
eine Basis (16), beinhaltend einen oder mehrere Positionierer, die mit dem Teil (12) in Eingriff stehen und die Basis (16) relativ zu dem Teil (12) positionieren; und
eine Induktionsheizspule (18), die von der Basis (16) getragen wird, wobei die Induktionsheizspule (18) innerhalb der Bohrung (14) des Teils (12) angeordnet ist und induktiv mit dem Teil (12) gekoppelt ist, wobei die Induktionsheizspule (18) um eine Spulenachse (CA) gewickelt ist, wobei die Spulenachse (CA) und die Bohrungsachse (BA) nicht koaxial verlaufen,
wobei:
die Spulenachse (CA) von der Bohrungsmittelachse (BA) versetzt ist;
die Vorrichtung (10) einen Schlitten (24), der verstellbar an der Basis (16) befestigt ist, beinhaltet;
die Induktionsheizspule (18) an dem Schlitten (24) befestigt ist und mit dem Schlitten (24) relativ zu der Basis (16) verstellbar ist, um die Spulenachse (CA) relativ zu der Bohrungsmittelachse (BA) zu variieren; und
die Spulenachse (CA) parallel zu der Bohrungsmittelachse (BA) der Bohrung (14) verläuft.

7. Induktionserwärmungsbaugruppe nach Anspruch 6, wobei die Bohrungsachse (BA) zwischen 0 und 45 Grad zur Horizontalen (H) verläuft.

8. Induktionserwärmungsbaugruppe nach Anspruch 6 oder 7, wobei der eine oder die mehreren Positionierer drei Positionierer, die mit einer zylindrischen Oberfläche des Teils (12) in Eingriff stehen, beinhalten.

9. Induktionserwärmungsbaugruppe nach einem der Ansprüche 6 bis 8, wobei:
die Bohrungsachse (BA) horizontal (H) verläuft; und
der Schlitten (24) entlang einer vertikalen Richtung relativ zu der Basis (16) verstellbar ist.

## Revendications

1. Procédé de chauffage d'une pièce (12) par induction, la pièce (12) comportant un alésage (14) formé en elle et étant orientée de sorte qu'un axe central (BA) de l'alésage (14) de la pièce (12) soit orienté entre 0 et 45 degrés par rapport à l'horizontale (H), le procédé comprenant :
le montage d'un dispositif de chauffage par induction (10) incluant une bobine de chauffage par induction (18) sur la pièce (12) de manière à ce que :
un ou plusieurs éléments de positionnement du dispositif de chauffage par induction (10) sont en prise avec la pièce (12) ;
la bobine de chauffage par induction (18) est disposée à l'intérieur de l'alésage (14) de la pièce (12) ;
la bobine de chauffage par induction (18) est disposée de manière excentrée par rapport à l'alésage (14) de la pièce (12) de sorte que la bobine de chauffage par induction (18) soit disposée plus près d'une partie inférieure de la surface (14B) de l'alésage (14) que d'une partie supérieure de la surface (14T) de l'alésage (14) ; et
la bobine de chauffage par induction (18) est couplée inductivement à la pièce (12) ; et
après le montage du dispositif de chauffage par induction (10) sur la pièce (12), la circulation d'un courant électrique alternatif dans la bobine de chauffage par induction (18) pour chauffer la pièce (12),
dans lequel :
la bobine de chauffage par induction (18) est enroulée autour d'un axe de bobine (CA) ;
l'axe de bobine (CA) est parallèle à un axe central (BA) de l'alésage (14) ; et
l'axe de bobine (CA) est décalé par rapport à l'axe central (BA) de l'alésage (14).

2. Procédé selon la revendication 1, dans lequel :
le dispositif de chauffage par induction (10) comprend une base (16) fixée à la pièce (12) ;
le ou les éléments de positionnement sont disposés sur la base (16) ;
le dispositif de chauffage par induction (10) comprend un chariot (24) réglable verticalement par rapport à la base (16), la bobine de chauffage par induction (18) étant fixée au chariot (24) et réglable avec le chariot (24) par rapport à la base (16) ; et
le procédé comprend le réglage d'une position verticale de la bobine de chauffage par induction (18) par rapport à la base (16) via le chariot (24).

3. Procédé selon la revendication 1 ou 2, dans lequel l'alésage (14) a un profil de section transversale circulaire dans un plan perpendiculaire à l'axe central (BA) de l'alésage (14).

4. Procédé selon l'une quelconque des revendications précédentes, dans lequel l'axe de bobine (CA) est décalé par rapport à l'axe d'alésage (BA) d'une distance de décalage comprise entre 0,1 % et 5 % du diamètre de l'alésage (14).

5. Procédé selon l'une quelconque des revendications précédentes, dans lequel le dispositif de chauffage par induction (10) est monté sur la pièce (12) de sorte que la bobine de chauffage par induction (18) soit couplée inductivement à au moins une majorité d'une surface circonférentielle de l'alésage (14).

6. Ensemble de chauffage par induction comprenant :
une pièce (12) comportant un alésage (14), l'alésage (14) comportant un axe d'alésage central (BA) ; et
un dispositif de fixation (10) monté sur la pièce (12), le dispositif de fixation (10) comprenant :
une base (16) incluant un ou plusieurs éléments de positionnement en prise avec la pièce (12) et positionnant la base (16) par rapport à la pièce (12) ; et
une bobine de chauffage par induction (18) supportée par la base (16), la bobine de chauffage par induction (18) étant disposée à l'intérieur de l'alésage (14) de la pièce (12) et étant couplée inductivement à la pièce (12), la bobine de chauffage par induction (18) étant enroulée autour d'un axe de bobine (CA), l'axe de bobine (CA) et l'axe d'alésage (BA) étant non coaxiaux, dans lequel :
l'axe de bobine (CA) est décalé par rapport à l'axe d'alésage central (BA) ;
le dispositif (10) comprend un chariot (24) fixé de manière réglable à la base (16) ;
la bobine de chauffage par induction (18) est fixée au chariot (24) et est réglable avec le chariot (24) par rapport à la base (16) pour faire varier l'axe de bobine (CA) par rapport à l'axe d'alésage central (BA) ; et
l'axe de bobine (CA) est parallèle à un axe central (BA) de l'alésage (14).

7. Ensemble de chauffage par induction selon la revendication 6, dans lequel l'axe d'alésage (BA) est compris entre 0 et 45 degrés de l'horizontale (H).

8. Ensemble de chauffage par induction selon la revendication 6 ou 7, dans lequel le ou les éléments de positionnement comprennent trois éléments de positionnement en prise avec une surface cylindrique de la pièce (12).

9. Ensemble de chauffage par induction selon l'une quelconque des revendications 6 à 8, dans lequel :
l'axe d'alésage (BA) est horizontal (H) ; et
le chariot (24) est réglable dans une direction verticale par rapport à la base (16).
